# EUROPEAN PATENT APPLICATION

(11) **EP 1 848 141 A2**
(43) Date of publication of application: **24.10.2007**
(21) Application number: 07251644.6
(22) Date of filing: 19.04.2007
(51) Int. Cl.: H04L 1/20, H04L 1/24, H04L 27/38

(54) **Constellation patterns**

(30) Priority: 21.04.2006 GB 0607969
(71) Applicant: Tektronix International Sales GmbH, Neuhausen 82, Schaffhausen (CH)
(72) Inventor: Amos, Christopher Terence, c/o Tektronix Cambridge Ltd., Histon Cambrige CB4 9ZR (GB)
(74) Representative: Want, Clifford James

(57) **Abstract**

An apparatus for generating a constellation diagram generates a first ellipse or circle 51 centred on a constellation point 11 having radii representative of current average values of an error rate metric. Preferably, the constellation diagram display has a second ellipse or circle 52 centred on the constellation point having radii representative of a predetermined maximum permissible value of the error rate metric.

## Description

This invention relates to the generation of constellation patterns. The invention has particular application to the generation and output of constellation patterns or diagrams by test equipment such as oscilloscopes, QAM analyzers, spectrum analyzers and video test equipment.

Constellation patterns or diagrams are used graphically to represent quality, or illustrate impairments, of a signal.

A constellation diagram may be used as a representation of a modulation scheme in the complex plane. The real and imaginary axes are often called the *in phase,* or I-axis and the *quadrature,* or Q-axis, respectively. By choosing a set of complex numbers to represent the modulation symbols in this way, the symbols may be physically transmitted by varying the amplitude and phase of a sinusoidal carrier wave.

The diagram so-formed is known as a constellation diagram and the points on the diagram as constellation points. The constellation points represent a set of modulation symbols which comprise a modulation alphabet. Upon reception of a signal, a demodulator examines a received symbol, which may have been corrupted by, for example, additive white Gaussian noise, and selects, as an estimate of what was actually sent by the transmitter, that point on the constellation diagram which is closest, in a Euclidean distance sense, to that of the received signal. Thus the symbol will demodulate incorrectly if the corruption has meant that the received signal is received closer to another constellation point than the one sent by the transmitter. This process is called maximum likelihood detection. The constellation diagram allows a straightforward visualization of this process - the received symbol may be imagined as a point in the I-Q plane and then it may be concluded that the symbol originally sent by the transmitter is whichever constellation point is closest to the received symbol.

The quality of RF demodulation is often expressed as a number or ratio. In quadrature amplitude modulation (QAM) and quadrature phase-shift keying (QPSK) systems, two common metrics employed are the modulation error ratio (MER) in dB and error vector magnitude (EVM) in percent.

For an experienced RF engineer these metrics can be sufficient, however in many operator environments a user prefers to see a visual representation of signal quality. This is typically achieved with a constellation diagram designed to show graphically how the received signal has varied from an ideal transmitted signal.

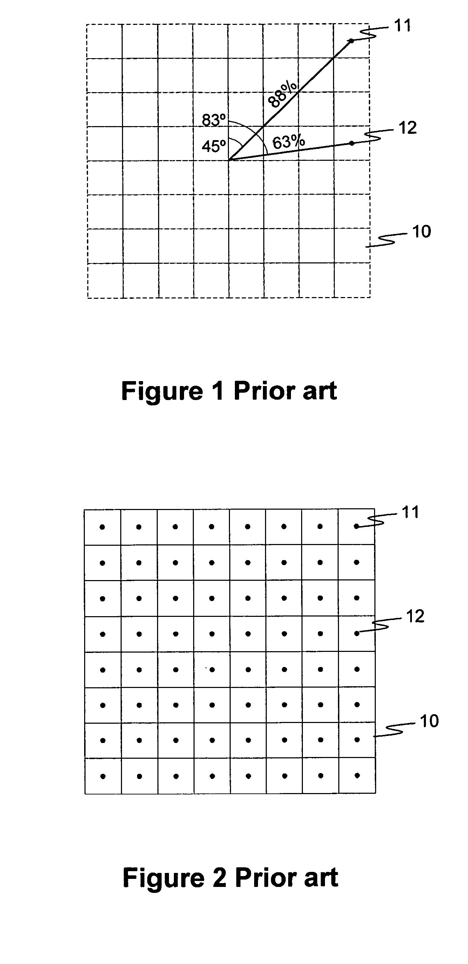

Referring to Figure 1, in an example of QAM64 and a modulator that may freely vary amplitude and phase angle, QAM64 restricts the variations to allow only 64 combinations. A notional square grid 10 is created, comprising 64 squares, at the centre of each square is one of the 64 target phase and amplitude variations. To get to the top right point 11, the modulator would rotate the phase by 45° and set the amplitude to approximately 88%, to get to the point four squares below, the phase would increase to approximately 83° while the amplitude would reduce to approximately 63%, as shown in Figure 1.

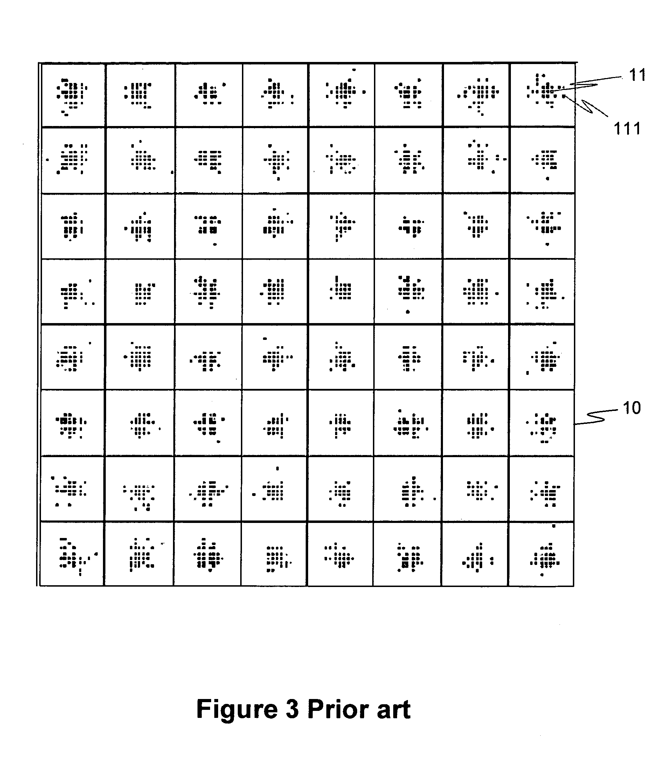

If the position of the constellation points on a constellation diagram was shown at the modulator output, there would be very little noise so the constellation diagram would have just 64 spots in the centre of 64 squares, as shown in Figure 2. However, the effect of noise during transmission can be seen in a randomised positioning of the received symbols 111 around the constellation points 11 in the display of Figure 3.

At the demodulator, the phase angle and magnitude are measured and the demodulator selects a nearest target or ideal point to determine the transmitted information - that is, in the notional grid 10 of the Figures, the modulator determines into which square the received symbol falls.

In QAM64, 6 bits are modulated at a time, which gives the modulated symbol a value between 0 and 63 and each of the ideal points is assigned a value between 0 and 63. So the demodulator can determine the closest ideal point and from that recover the original value, hence the original 6 bits fed into the modulator.

Figure 3 shows a known constellation diagram, in this case a QAM64 signal recovered from a QAMB (cable) modulator. The effect of noise has spread the recovered points 111 around the ideal points 11; most points are clearly inside a square, a few points can be seen on the edge of a square. In these latter cases we cannot know whether the point is just inside, just outside, or indeed many squares away from the square it was intended to occupy by the modulator.

The user can see that if the 'cloud' of points 111 is falling across the edges of its square then there are likely to be decoding errors. Due to the error detection and correction mechanisms typically employed, the demodulator can recover from some proportion of errors depending on the correction scheme in use. This means the user cannot say that they have a problem just because a point falls in the wrong position. Instead the user must judge the proportion that fall in the wrong area.

This display has a drawback, the likelihood is that most of the points 111 will fall in the centre of a square. Typically in a display, a location where a plurality of points 111 fall is made brighter to indicate the plurality of points, by allowing the points to fade over a finite perceptible time period. However, limitations in the display and in human perception, mean that this provides an imprecise indication of a proportion of symbols falling, for example, in the centre of a square. Two visually similar displays could represent either many samples with a few errors, or few samples with many errors. On the other hand, the MER and EVM metrics take account of all the points sampled.

When a system is designed or commissioned, the design engineers will determine how much noise can be accepted at various stages in a transmission system for the end users to continue to receive service. One way to express the noise limit allowed at any point is to use a minimum permissible MER value. The problem then is how to represent graphically to the user, how close the signal is to this predetermined error value.

It is an object of the present invention at least to ameliorate the aforesaid shortcomings in the prior art.

According to a first aspect of the invention there is provided an apparatus arranged to process a noisy modulated signal to monitor a quality of radio frequency demodulation of the signal comprising: receiving means arranged to receive a plurality of modulation symbols of the modulated signal; processing means arranged to determine respective nearest constellation points for each of the received modulation symbols; calculating means arranged to calculate an average deviation over a predetermined time period of the received modulation symbols from their respective nearest constellation point; and output means arranged to plot in an array representing the constellation points, the modulation symbols and first ellipses centred on the respective constellation points having radii representative of the average deviation.

Conveniently, the apparatus is adapted to output a constellation diagram comprising a second ellipse centred on the constellation point having radii representative of predetermined permissible limits of values of the error rate metric.

Advantageously, at least one of the first ellipse and the second ellipse is a circle.

Conveniently, the apparatus is adapted for a quadrature amplitude modulation system or a phase-shift keying system, in which the deviation is the modulation error ratio or the error vector magnitude.

Advantageously, the radii of the first ellipse are representative of average distances in the constellation diagram of the location of received symbols from a nearest predetermined error-free location.

According to a second aspect of the invention, there is provided a method of processing a noisy modulated signal to monitor a quality of radio frequency demodulation of the signal comprising the steps of: receiving a plurality of modulation symbols of the modulated signal; determining respective nearest constellation points for each of the received modulation symbols; calculating an average deviation over a predetermined time period of the received modulation symbols from their respective nearest constellation point; and plotting in an array representing the constellation points, the modulation symbols and first ellipses centred on the respective constellation points having radii representative of the average deviation.

Conveniently, the method comprises setting predetermined permissible limit values of the average deviation and generating a second ellipse centred on the constellation point having radii representative of the predetermined permissible limit values of the error rate metric.

Advantageously, determining respective nearest constellation points comprises determining the phase angle and magnitude of the modulation symbols.

Conveniently, a first radius of the first ellipse represents an average deviation of an in-phase component of the signal and a second radius of the first ellipse represents an average deviation of a quadrature component of the signal.

Advantageously, at least one of the first ellipse and the second ellipse is a circle.

Conveniently, the deviation is the modulation error ratio or the error vector magnitude.

Advantageosuly, the radii of the first ellipse are representative of average distances in the constellation diagram of the location of received symbols from a nearest predetermined error-free location.

The invention will now be described, by way of example, with reference to the accompanying drawings in which:
Figure 1 is a known constellation diagram with two constellation points;
Figure 2 is a known constellation diagram with constellation points as sent by a transmitter;
Figure 3 is a known constellation diagram display with constellation points as received;
Figure 4 is a constellation diagram showing a modulation error vector;
Figure 5 is a constellation diagram according to the invention; and
Figure 6 is a constellation diagram display according to the invention.

In the Figures, like reference numbers denote like parts.

The technique used to address the problem according to the present invention is to superimpose on the constellation display a circle around each ideal point, a radius of which represents the current MER, and in addition another circle is drawn on the display to indicate the predetermined permissible maximum or minimum error value as appropriate.

In general, an ellipse may be used instead of one or both circles respectively, for example, the first radius of an ellipse may represent an error metric such as the MER for the I component of a signal and the second radius of the ellipse may represent an error metric for the Q component. However, for simplicity of illustration, the present discussion is confined to the use of first and second circles, as used in many practical embodiments of the invention.

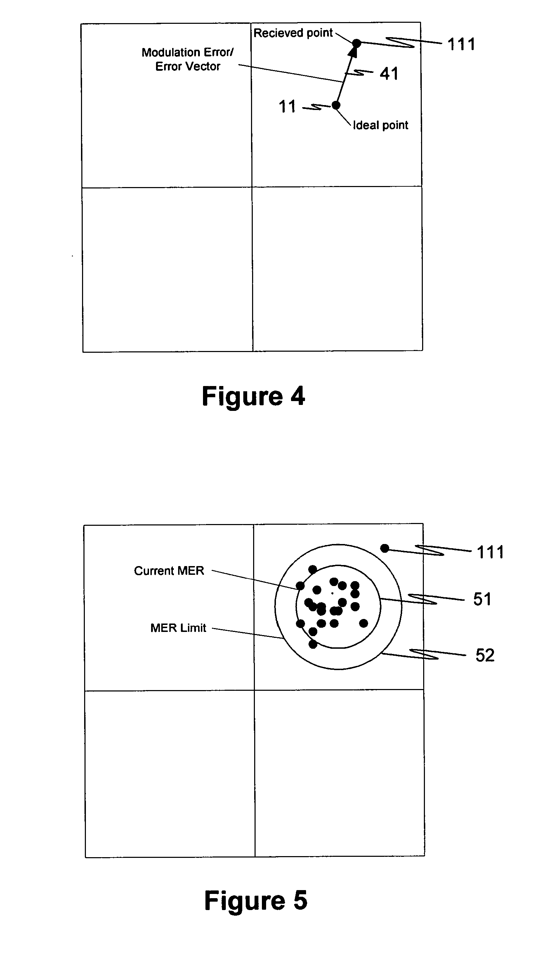

Referring to Figure 4, the MER is calculated as the average, e.g. root mean square, deviation from an ideal point 11. For each point 11 received, the scalar distance from the point 111 to the intended, ideal point 11 is calculated. The scalars of the vectors 41 joining the received points to the ideal points are averaged so as to ensure deviations in opposite directions do not cancel each other out. A new average may be obtained and the display may be refreshed in time periods of the order of a second.

Referring to Figure 5, an appropriately scaled product of this average deviation is plotted as the radius of a circle 51 around the ideal point 11. In the same way the predetermined maximum permissible error value also gives the radius of a circle 52 around the ideal point 11.

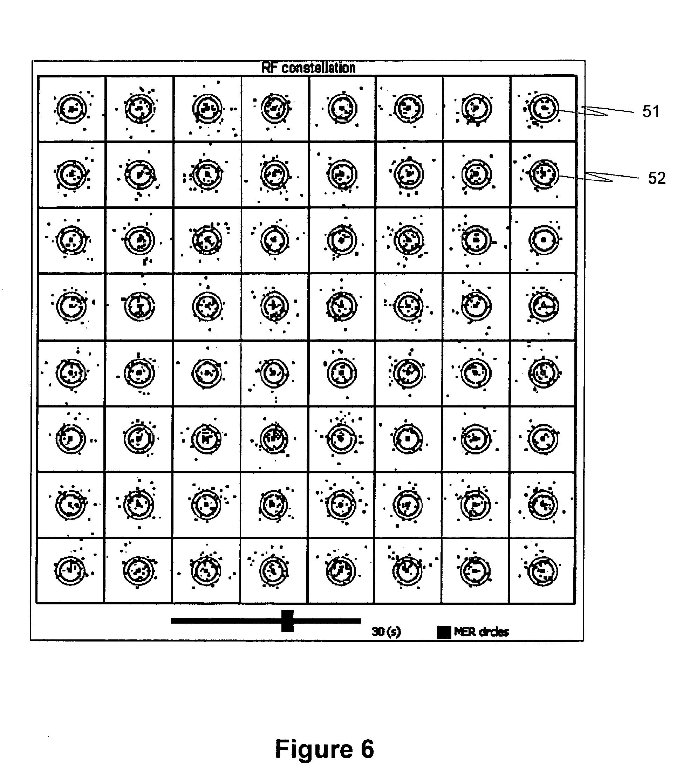

Referring to Figure 6, in a resultant display, despite the points 111 being well spread out, the MER circles 51, 52 may show that the MER is still well within the predetermined value.

Thus the difficulty is overcome of visualizing an RMS of the "clouds" of points with the poor z-axis or greyscale rendering of the prior art. One advantage of the visual, graphic comparison of the average MER or EVM circle radii with the preset limit value radii is the provision of a visualization of the error metric margin.

In a possible embodiment of the invention, points falling outside the circle representing the maximum permissible error are displayed in a different colour, for example red, from the colour, for example green, of points falling within the maximum permissible error circle. Where such different colours are used, visual presentation of the circle or ellipse representing the limit of permissible error could optionally be dispensed with.

It will be understood that where reference is made to a display, a printed output may alternatively or additionally be provided.

EVM can be approximated from MER since EVM is a measure of the same noise, so the discussion for MER is equally applicable to EVM. Both EVM and MER measure deviation from an ideal point. The use of EVM as an error metric is particularly applicable to QPSK where the EVM can reach over 20%, whereas in QAM, the EVM would typically be lower. In addition, other error rate metrics, such as signal noise ratio, carrier noise ratio, bit error ratio, or E_{b}/Nₒ, the energy per bit per noise power spectral density, could similarly be used.

Although the invention has been described using ellipses and circles, it will be understood that other representations, for example discs or annuli, could alternatively be used. Moreover, the illustrated square constellations are just one example of known constellations to which the invention may be applied, such as, for example, rectangular, ring or diamond-shaped constellations.

Although in the illustrated example a single metric is calculated and displayed for all constellation points, it will be understood that alternatively, a different average could be displayed as a circle or ellipse for each constellation point or for groups of constellations points. This is useful for plotting when there are distortions like phase noise and quadrature or gain imbalance. However, it is preferable to have fixed radii when plotting preset alarm limit circles.

## Claims

1. An apparatus arranged to process a noisy modulated signal to monitor a quality of radio frequency demodulation of the signal comprising:
a. receiving means arranged to receive a plurality of modulation symbols (111) of the modulated signal;
b. processing means arranged to determine respective nearest constellation points (11) for each of the received modulation symbols;
c. calculating means arranged to calculate an average deviation over a predetermined time period of the received modulation symbols from their respective nearest constellation point; and
d. output means arranged to plot in an array representing the constellation points, the modulation symbols (111) and first ellipses (51) centred on the respective constellation points having radii representative of the average deviation.

2. An apparatus as claimed in claim 1, adapted to output a constellation diagram comprising a second ellipse (52) centred on the constellation point having radii representative of predetermined permissible limits of values of the error rate metric.

3. An apparatus as claimed in claims 1 or 2, wherein at least one of the first ellipse and the second ellipse is a circle.

4. An apparatus as claimed in any of the preceding claims, adapted for a quadrature amplitude modulation system or a phase-shift keying system, in which the deviation is the modulation error ratio or the error vector magnitude.

5. An apparatus as claimed in claim 4, wherein the radii of the first ellipse are representative of average distances (41) in the constellation diagram of the location of received symbols (111) from a nearest predetermined error-free location (11).

6. A method of processing a noisy modulated signal to monitor a quality of radio frequency demodulation of the signal comprising the steps of:
a. receiving a plurality of modulation symbols (111) of the modulated signal;
b. determining respective nearest constellation points (11) for each of the received modulation symbols;
c. calculating an average deviation over a predetermined time period of the received modulation symbols (111) from their respective nearest constellation point (11); and
d. plotting in an array representing the constellation points, the modulation symbols and first ellipses (51) centred on the respective constellation points (11) having radii representative of the average deviation.

7. A method as claimed in claim 6, comprising setting predetermined permissible limit values of the average deviation and generating a second ellipse (52) centred on the constellation point (11) having radii representative of the predetermined permissible limit values of the error rate metric.

8. A method as claimed in claims 6 or 7, wherein determining respective nearest constellation points (11) comprises determining the phase angle and magnitude of the modulation symbols.

9. A method as claimed in any of claims 6 to 8, wherein a first radius of the first ellipse (51) represents an average deviation of an in-phase component of the signal and a second radius of the first ellipse (51) represents an average deviation of a quadrature component of the signal.

10. A method as claimed in any of claims 6 to 9, wherein at least one of the first ellipse (51) and the second ellipse (52) is a circle.

11. A method as claimed in any of claims 6 to 10, wherein the deviation is the modulation error ratio or the error vector magnitude.

12. A method as claimed in any of claims 6 to 11, wherein the radii of the first ellipse (51) are representative of average distances in the constellation diagram of the location of received symbols (111) from a nearest predetermined error-free location (11).
